(19) Europäisches Patentamt / European Patent Office / Office européen des brevets

(11) **EP 4 481 622 A1**

(12) **EUROPEAN PATENT APPLICATION**
published in accordance with Art. 153(4) EPC

(43) Date of publication:
25.12.2024 Bulletin 2024/52

(21) Application number: 23781394.4

(22) Date of filing: 30.03.2023

(51) International Patent Classification (IPC):
*G06K 7/14* (2006.01)  *G06K 19/06* (2006.01)
*G06Q 50/30* (2012.01)  *G06V 20/62* (2022.01)
*G06V 10/74* (2022.01)  *G06V 10/80* (2022.01)
*H04N 7/18* (2006.01)  *G06N 3/08* (2023.01)
*G06T 7/70* (2017.01)

(52) Cooperative Patent Classification (CPC):
G06K 7/14; G06K 19/06; G06N 3/08; G06Q 50/40;
G06T 7/70; G06V 10/74; G06V 10/80; G06V 20/62;
H04N 7/18

(86) International application number:
PCT/KR2023/004267

(87) International publication number:
WO 2023/191542 (05.10.2023 Gazette 2023/40)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.03.2022  KR 20220039473
30.03.2022  KR 20220039474
28.11.2022  KR 20220161425
28.11.2022  KR 20220161426

(71) Applicant: **Lightvision Inc.**
**Seoul 04793 (KR)**

(72) Inventors:
• **JEONG, Jin Ha**
**Yongin-si, Gyeonggi-do 16960 (KR)**
• **RA, Moon Soo**
**Bucheon-si, Gyeonggi-do 14539 (KR)**
• **LEE, Hea Yun**
**Suwon-si, Gyeonggi-do 16517 (KR)**
• **LEE, Hyun Ji**
**Seoul 06074 (KR)**

(74) Representative: **BCKIP Part mbB**
**Siegfriedstraße 8**
**80803 München (DE)**

(54) **PARKING MANAGEMENT SYSTEM ACCURATELY IDENTIFYING VEHICLES OR USING IDENTIFIER WITHOUT CAUSING CONGESTION**

(57) A parking management system for identifying accurately a vehicle without traffic congestion is disclosed. The parking management system comprises a first image obtaining device configured to recognize a vehicle number at an entry of a parking lot or in the parking lot, a second image obtaining device installed in the parking lot, and a computing device configured to communicate with the first image obtaining device or the second image obtaining device. Here, the computing device identifies the vehicle considering vehicle information detected by using a re-identification (RE-ID) technology and vehicle information obtained by analyzing an image obtained from at least one of the image obtaining devices, and the RE-ID technology determines whether vehicles are the same by using appearance information of a vehicle included in an image obtained by the first image obtaining device and appearance information of a vehicle included in an image obtained by the second image obtaining device.

EP 4 481 622 A1

## FIG. 5

Entrance camera     Parking barrier     RE-ID technology

[ entry ]

Exit camera     Parking barrier     Pay settlement machine

[ exit ]

**Description**

TECHNICAL FIELD

The present disclosure relates to a parking management system for identifying accurately a vehicle without traffic congestion or using an identifier.

BACKGROUND ART

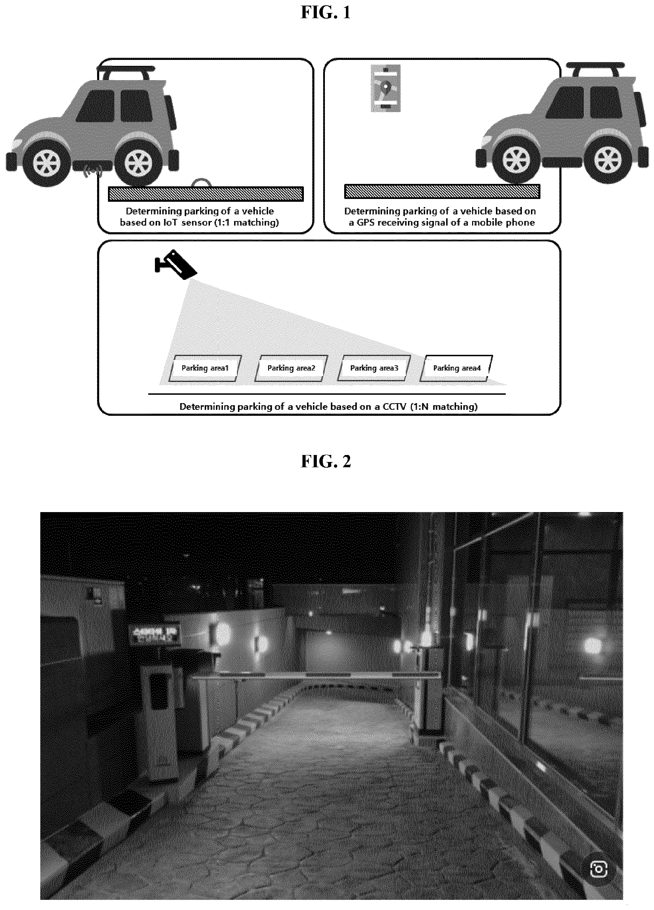

In the case of parking sharing services, it is often frustrating to arrive at the site only to find unauthorized vehicles parked in the spot. To address this, various methods have emerged to check whether a vehicle is in the parking space or not. For example, a method of detecting the vehicle on the parking area through IoT sensors which are matched one to one with parking areas as shown in FIG. 1, a method of detecting the vehicle on the parking area using a CCTV camera and a method of detecting the vehicle on the parking area through a GPS receiving signal of a mobile phone, etc. have been used.

However, this parking management separates usually an inner space from an outer space and stops the vehicle that a parking fee is not paid from leaving by using a parking barrier, but much inconvenience occurs due to the parking barrier. The parking barrier may be broken down, it costs a lot of money to install the parking barrier, and traffic congestion may occur due to the parking barrier when the vehicle enters.

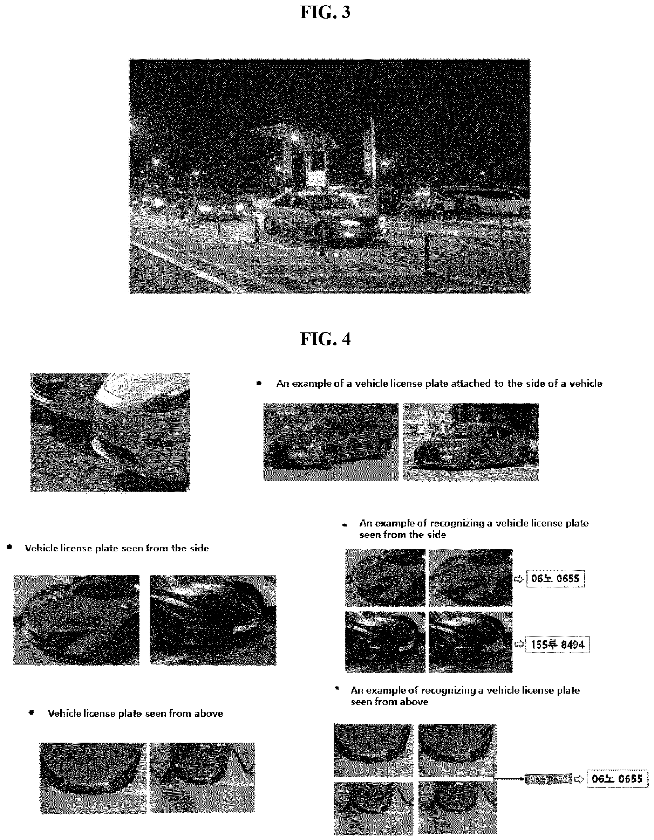

In conventional parking management system shown in FIG. 2, an ALPR camera detects a vehicle number, a parking barrier is opened and the vehicle is parked in the parking lot. In exit, an ALPR camera detects the vehicle number and the parking barrier is opened when a user pays a parking fee through a KIOSK. In this parking management system, congestion may occur when vehicles enter due to the parking barrier as shown in FIG. 3. Additionally, it costs a lot of money to construct the parking management system because the parking barrier is expensive.

The ALPR camera that recognizes the vehicle number may experience recognition errors when capturing the vehicle at an oblique angle as shown in FIG. 4. Accordingly, most entrances of parking lots are designed narrowly, causing inconvenience for inexperienced drivers who may scrape their wheels or the body of their vehicles.

Furthermore, the concrete structure for installing the ALPR camera occupies a certain space in the entrance area, which may lead to more frequent occurrences of inexperienced drivers scratching their vehicles.

That is, for the measurement of the ALPR camera, a road must be narrowed, and the ALPR cameras should be installed on the road, which can cause damage to vehicles.

SUMMARY

The present disclosure is to provide a parking management system for identifying accurately a vehicle without traffic congestion.

Additionally, the present disclosure is to provide a RE-ID technology for identifying accurately a vehicle.

Moreover, the present disclosure is to provide a tracking technology for detecting a parking or an exit of a vehicle.

The present disclosure is to provide a parking management system for paying a parking fee using an identifier.

A parking management system according to an embodiment of the present disclosure includes a first image obtaining device configured to recognize a vehicle number at an entry of a parking lot or in the parking lot; a second image obtaining device installed in the parking lot; and a computing device configured to communicate with the first image obtaining device or the second image obtaining device. Here, the computing device identifies the vehicle considering vehicle information detected by using a re-identification RE-ID technology and vehicle information obtained by analyzing an image obtained from at least one of the image obtaining devices, and the RE-ID technology determines whether vehicles are the same by using appearance information of a vehicle included in an image obtained by the first image obtaining device and appearance information of a vehicle included in an image obtained by the second image obtaining device.

A parking management system according to another embodiment of the present disclosure includes a first image obtaining device configured to recognize a vehicle number; a second image obtaining device; an identifier; and a computing device configured to communicate with the first image obtaining device or the second image obtaining device. Here, the computing device identifies the vehicle by using one or more of vehicle information obtained by analyzing an image obtained by at least one of the image obtaining devices and vehicle information detected by using a re-identification (RE-ID) technology. Here, the computing device charges for or collects automatically parking fee based on an inputted user's information when a user of the vehicle inputs the user's information through the recognition of the identifier, and the RE-ID technology determines whether vehicles are the same by using appearance information of a vehicle included in an image obtained by the first image obtaining device and appearance information of a vehicle included in an image obtained by the second image obtaining device.

A computing device used in a parking management system according to an embodiment of the present disclosure includes a communication unit which is a communication path with a first image obtaining device or a second image obtaining device; and a re-identification unit configured to identify a vehicle entered in a parking lot considering both of vehicle information detected by using a re-identification RE-ID technology and vehicle information obtained by analyzing an image obtained by at least one of the image obtaining devices. Here, the RE-ID technology determines whether vehicles are the same by using appearance information of a vehicle included in an image obtained by the first image obtaining device and appearance information of a vehicle included in an image obtained by the second image obtaining device.

A computing device used in a parking management system according to another embodiment of the present disclosure includes a communication unit which is a communication path with a first image obtaining device or a second image obtaining device; an identifier unit configured to receive user's information through recognition of an identifier; a pay settlement unit; and a re-identification unit configured to identify a vehicle entered in a parking lot considering at least one of vehicle information detected by using a re-identification RE-ID technology and vehicle information obtained by analyzing an image obtained by at least one of the image obtaining devices. Here, the pay settlement unit charges for or collects automatically parking fee based on an inputted user's information when a user of the vehicle inputs the user's information through the recognition of the identifier, and the RE-ID technology determines whether vehicles are the same by using appearance information of a vehicle included in an image obtained by the first image obtaining device and appearance information of a vehicle included in an image obtained by the second image obtaining device.

A parking management system of the present disclosure identifies a vehicle using a vehicle number recognized by a camera and a RE-ID (re-identification) technology, thereby identifying accurately the vehicle irrespective of a location of the camera and recognition error, etc.

In addition, the parking management system may not employ a parking barrier, and thus a lot of money for installing the parking barrier is not needed and it may prevent congestion. Moreover, the scratching of the vehicle may be considerably reduced when the vehicle enters or exits.

Furthermore, if the parking management system collects parking fees using an identifier, it can also collect parking fees for vehicles that leave without paying and may not need to install a pay settlement machine or an exit parking barrier.

BRIEF DESCRIPTION OF DRAWINGS

Example embodiments of the present disclosure will become more apparent by describing in detail example embodiments of the present disclosure with reference to the accompanying drawings, in which:

FIG. 1 is a view illustrating conventional method of verifying a parking area;
FIG. 2 is a view illustrating conventional parking management system;
FIG. 3 is a view illustrating an example of congestion occurred when vehicles enter;
FIG. 4 is a view illustrating the case that a vehicle number is not recognized due to oblique capturing angle;
FIG. 5 is a block diagram illustrating schematically a parking management system according to an embodiment of the present disclosure;
FIG. 6 is a view illustrating an example of a RE-ID technology according to an embodiment of the present disclosure;
FIG. 7 is a view illustrating a process of detecting different detail in case of the same type of vehicles according to an embodiment of the present disclosure;
FIG. 8 is a view illustrating a process of training a RE-ID deep learning model using a triplet loss according to an embodiment of the present disclosure;
FIG. 9 is a block diagram illustrating schematically a parking management system according to another embodiment of the present disclosure;
FIG. 10 is a block diagram illustrating schematically a parking management system according to still another embodiment of the present disclosure;
FIG. 11 to FIG. 14 are views illustrating a tracking process according to an embodiment of the present disclosure;
FIG. 15 is a view illustrating schematically a process of recognizing a QR code according to an embodiment of the present disclosure;
FIG. 16 is a view illustrating a process of processing the QR code according to an embodiment of the present disclosure;
FIG. 17 to FIG. 24 are views illustrating a RE-ID technology according to another embodiment of the present disclosure;
FIG. 25 is a flowchart illustrating a process of guiding available parking space according to an embodiment of the present disclosure; and
FIG. 26 is a block diagram illustrating a computing device according to an embodiment of the present disclosure.

DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The present disclosure relates to a parking management system and may have a structure in which congestion does not occur. Especially, the parking management system may operate efficiently and can be significantly cheaper in terms of cost compared to conventional systems.

The conventional parking management system uses fundamentally a parking barrier. This is for capturing the vehicle using a camera after stopping the vehicle to recognize accurately a vehicle number. Especially, for accurate identification of the vehicle, the conventional parking management system must design narrowly an entrance area of vehicles and use the parking barrier. Nevertheless, the vehicle number may not be accurately recognized when the camera captures the vehicle at oblique angle.

To solve the problem, the parking management system of the present disclosure uses a RE-ID (re-identification) technology developed independently. Particularly, the parking management system may identify accurately the vehicle using the RE-ID technology even if the camera does not recognize the vehicle number when the vehicle enters. Accordingly, it is not necessary to design narrowly an entrance area of vehicles and the parking management system may not use the parking barrier when the vehicle enters. However, the parking barrier may be used if it is required for safety of vehicles.

Of course, the parking management system may identify accurately the vehicle though the parking barrier is opened as traffic congestion is expected or the parking barrier is failed, and thus it charges for accurate fee (parking fee) to the vehicle.

In another embodiment, the parking management system may register entry by using identifiers (for example, QR codes) installed in the parking area, and thus it may automatically process payments through the registered information with the identifier even if payment has not been made through a pay settlement machine when leaving the parking lot. Accordingly, payment of the parking fee is possible though a parking barrier is not used in an exit area.

Hereinafter, various embodiment of the present disclosure will be described in detail with reference to accompanying drawings.

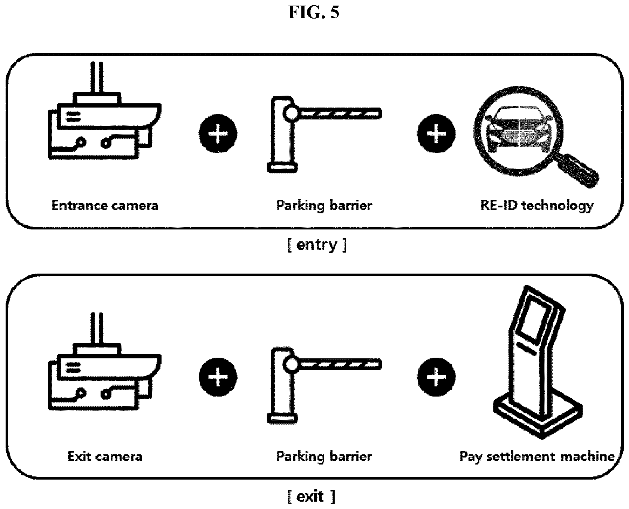

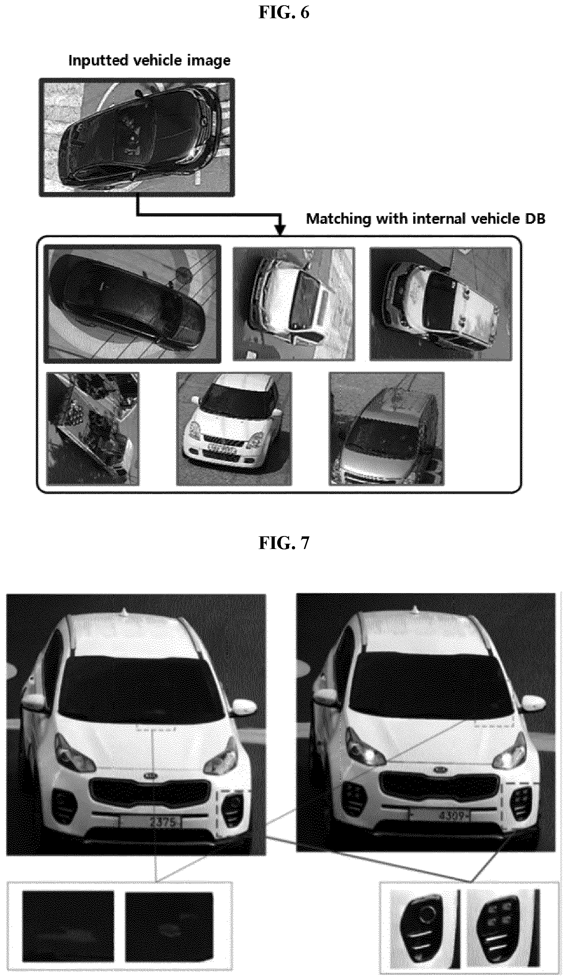

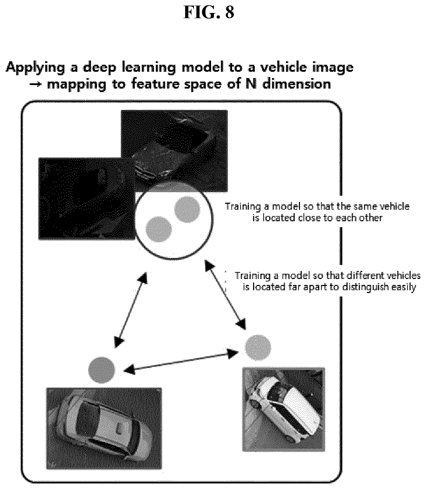

FIG. 5 is a block diagram illustrating schematically a parking management system according to an embodiment of the present disclosure, and FIG. 6 is a view illustrating an example of a RE-ID technology according to an embodiment of the present disclosure. FIG. 7 is a view illustrating a process of detecting different detail in case of the same type of vehicles according to an embodiment of the present disclosure, and FIG. 8 is a view illustrating a process of training a RE-ID deep learning model using a triplet loss according to an embodiment of the present disclosure.

In FIG. 5, the parking management system of the present disclosure may include an entrance camera and a parking barrier installed at an entrance area of the parking lot, an exit camera, a pay settlement machine and a parking barrier installed at an exit area of the parking lot and a computing device (not shown, for example a server). In the case where entry and exit are made through the same passage, there may only be one parking barrier for the entry and the exit.

Additionally, the camera (for example an ALPR camera) may be one example of an image obtaining device for recognizing the vehicle numbers, but various devices for recognizing the vehicle numbers may be used. Hereinafter, it is assumed that the image obtaining device is the camera for convenient description.

In an embodiment, the parking management system of the present embodiment may identify the vehicle by using both of an image captured by the entrance camera and the RE-ID technology to recognize entered vehicle, i.e. identify the vehicle number.

Of course, the image captured by the camera and the RE-ID technology may be applied according to a priority. For example, the image captured by the camera may be preferentially applied than the RE-ID technology. In this case, the RE-ID technology may not be applied when the vehicle number is definitely shown in the image captured by the camera, and it may be applied only when the vehicle number is not definitely shown in the image.

If the parking barrier is not used, there are limitations to the images obtained by the camera alone. Accordingly, the parking management system may identify vehicles by applying the image captured by the camera and the RE-ID technology to every entering vehicle. In this case, the parking management system may identify definitely the vehicle irrespective of a location of the camera, a capturing angle, a recognition rate of the vehicle number, etc.

The RE-ID technology is a technology that recognizes an object captured by one camera as the same object when the object is shown in another camera.

In an embodiment, the computing device may detect the vehicle number by analyzing an image captured by the entrance camera, discriminate whether the vehicles are the same by using the RE-ID technology and identify the vehicle considering both of the detected the vehicle number and a result discriminated by using the RE-ID technology.

For example, the RE-ID technology may detect the type of the vehicle by comparing a vehicle image included in an image obtained by the entrance camera with vehicle images stored in an internal DB or an external DB as shown in FIG. 6, and discriminate whether vehicles are the same by comparing the vehicle image included in the image obtained by the entrance camera with a vehicle image included in an image captured by a camera in the parking lot based on the detected type of the vehicle.

That is, the RE-ID technology may determine whether the vehicles are the same by comparing the appearance of the vehicle (appearance information) included in the image obtained by the entrance camera with the external appearance of the vehicle (appearance information) included in the image obtained by the camera in the parking lot.

Particularly, the RE-ID technology does not merely look at the overall shape of the vehicles, but it may compare detailed parts of the vehicles to determine whether they are the same vehicle as shown in FIG. 7. Here, the detailed part may be a part of the vehicle or a device installed at the vehicle or mounted on the vehicle (for example, a hi-pass terminal or a black box).

In an embodiment, the RE-ID technology may be trained through a machine learning, e.g. a deep learning model. For example, the deep learning model may use a triplet loss which is a loss function. In this case, in the event that multiple images including a vehicle are inputted as shown in FIG. 8, the images including the same vehicle may be induced to be located close to each other in an N (an integer more than 2)-dimensional feature space, and the images including different vehicles may be induced to be located far apart in the N-dimensional feature space so that they are easily distinguishable. As a result, the vehicle image included in the image captured by the entrance camera may be quickly and efficiently compared with the vehicle image stored in the DB.

In above description, the RE-ID technology compares the vehicle image included in the image captured by the entrance camera with the vehicle image in the DB. However, the RE-ID technology may compare the vehicle image included in the image captured by the internal camera in the parking lot with the vehicle image in the DB.

An exit camera may recognize at least one of the vehicle number and a vehicle image when the vehicle is exited, and the parking fee may be charged based on the parking time of the vehicle. Accordingly, a user may pay for parking fee through a pay settlement machine and then exit, and a parking barrier in an exit area will open when the parking fee is settled.

If the entrance and the exit exist in the same passage, there may only be one parking barrier for entry/exit of the vehicle. Of course, there may be only an exit camera and the pay settlement machine in the exit area without the parking barrier.

Additionally, the fee settlement may not be processed through the pay settlement machine and the parking fee may be billed separately to the user at a later time.

On the other hand, if the internal camera exists in the parking lot, the parking management system may recognize the vehicle number using the internal camera even if the vehicle number is not properly recognized when the vehicle enters. Here, the vehicle may be identified by considering the time at which it reaches the internal camera and the type of the vehicle, etc. after entering, and the number of the identified vehicle may also be detected through the internal camera. In this case, the fee settlement may be executed by using only the vehicle number when the vehicle exits.

Briefly, the parking management system of the present embodiment may identify accurately the entered vehicle by using together vehicle information detected when the vehicle enters and vehicle information (for example the type of the vehicle) detected through the RE-ID technology. Accordingly, the parking management system may identify accurately the vehicle even if the vehicle number is not properly recognized when the vehicle enters, and thus it is possible to charge for the parking fee. In this case, the parking barrier may not exist, but it may exist considering safety, etc.

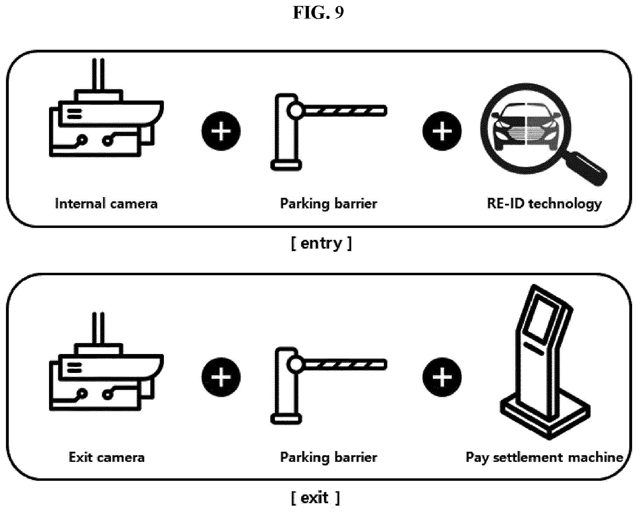

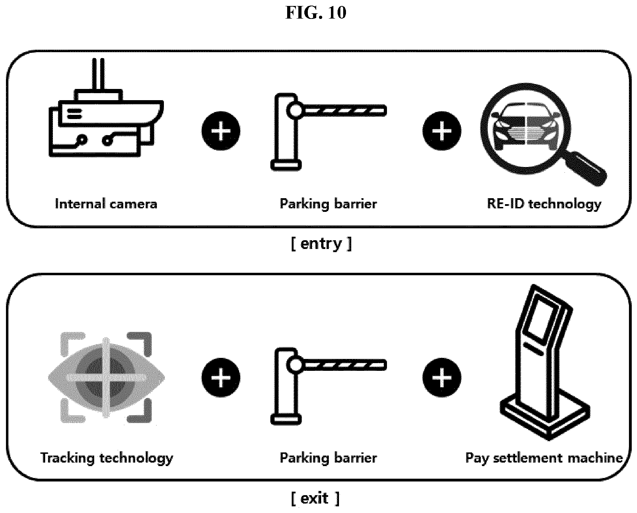

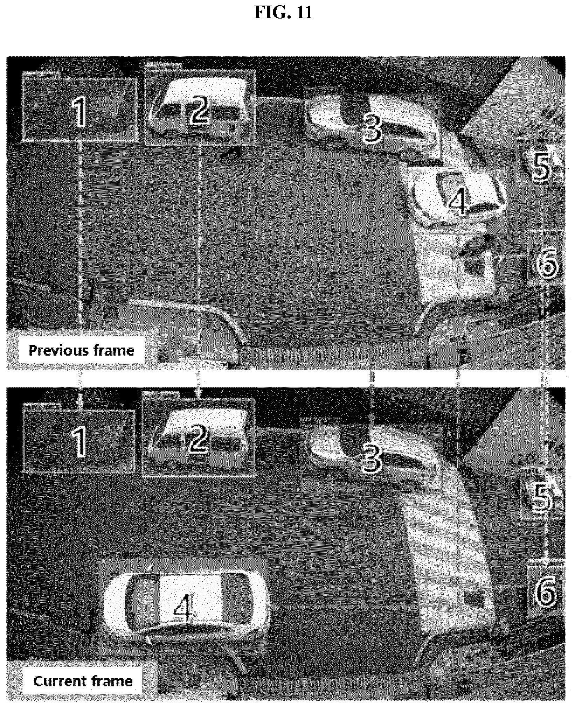

FIG. 9 is a block diagram illustrating schematically a parking management system according to another embodiment of the present disclosure, FIG. 10 is a block diagram illustrating schematically a parking management system according to still another embodiment of the present disclosure, and FIG. 11 to FIG. 14 are views illustrating a tracking process according to an embodiment of the present disclosure.

In FIG. 9, the parking management system of the present embodiment may include one or more internal cameras, an exit camera, a pay settlement machine and a computing device. In this case, a parking barrier may exist or not exist.

That is, the parking management system may not include an entry camera but include the internal camera established in a parking lot. Here, the internal camera may be installed at a location at which a parking space can be captured.

The internal camera recognizes a vehicle number when the vehicle parks in a parking spot and counts a parking time from the time at which the parking is completed.

In an embodiment, the computing device may identify the vehicle by applying together vehicle information detected through the internal camera and vehicle information (for example, a type of the vehicle) detected by using a RE-ID technology. Accordingly, even if the vehicle number is not recognized 100% because it is obliquely captured by the internal camera, the computing device may identify the vehicle, i.e., clearly identify it.

In another embodiment, the parking management system may identify clearly a vehicle by applying recognition of the vehicle number using a first internal camera and a RE-ID technology using the first internal camera and a second internal camera to the vehicle entering in the parking lot.

In still another embodiment, the computing device may detect entry and exit of the vehicle by using a tracking technology and recognize the vehicle number. That is, the computing device may identify and tracks clearly the vehicle by using the tracking technology even if the vehicle number is not properly recognized by the internal camera when the vehicle parks. In this case, an exit camera may not exit as shown in FIG. 10.

The technology for tracking a vehicle using the same camera may discriminate whether the vehicle enters corresponding area or exits from the corresponding area by comparing position information of the vehicle obtained from the previous frame with position information of the vehicle obtained from the current frame.

For example, if the computing device fails to find a vehicle that was present in the previous frame in the current frame, it may verify that the vehicle has exited the parking area monitored by corresponding camera.

In another example, if a vehicle present in the current frame does not exist in the previous frame, the computing device may verify that the vehicle has newly entered or parked in the parking area. For instance, if, as shown in FIG. 11, the other vehicles are located in the same position in both the previous frame and the current frame, but a vehicle number 4 is detected in the parking area only in the current frame, the computing device may verify that the vehicle number 4 has newly entered and parked in the parking area.

The computing device may the above tracking method to the internal cameras, thereby tracking moving of the vehicle. Furthermore, the computing device may obtain the vehicle number in a process of tracking the vehicle, and give a specific number to the vehicle.

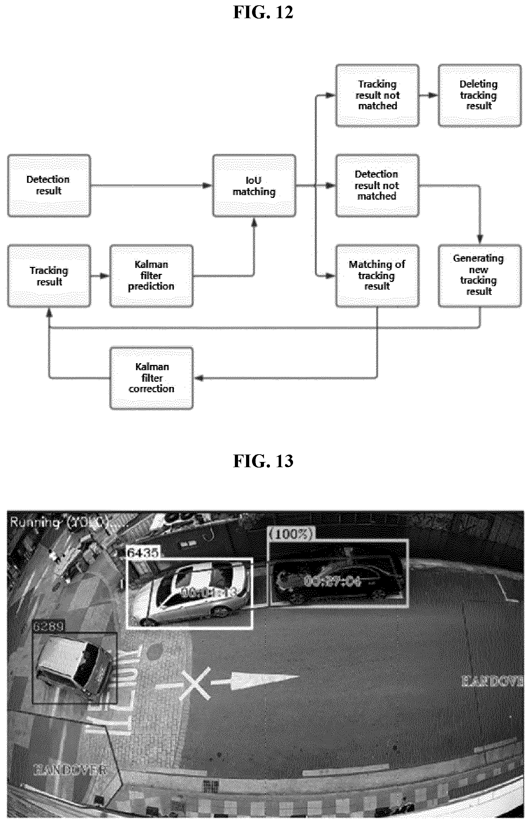

Referring to FIG. 12 for the tracking technology, the computing device may detect the vehicle by comparing current frame with previous frame and track the vehicle by performing an intersection over union (IOU) matching to determine whether the vehicle parks in corresponding parking area or exits from the corresponding parking area.

That is, the computing device may discriminate whether the vehicle parks in the parking area or exists from the parking area by detecting the proportion of a vehicle area (for example 6435, a rectangular box of the vehicle) detected by an AI model in the sum of the parking area and the vehicle area. Particularly, the parking or the exit may be determined by a ratio of an overlapped area of the parking area and the vehicle area and the IoU as shown in below equation.

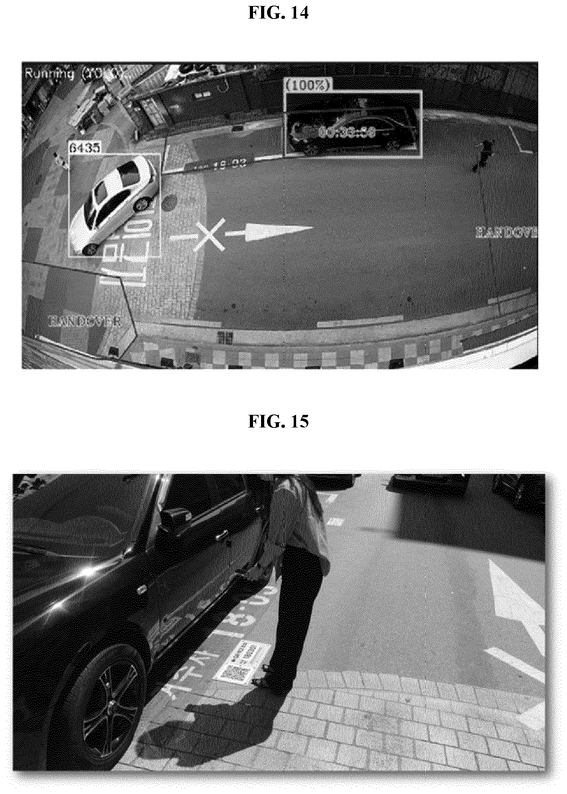

It is verified that a 6435 vehicle parking in FIG. 13 exists from a parking area in FIG. 14. An IoU of the 6435 vehicle is 0 in FIG. 14, and thus the computing device may verify through the IoU that the 6435 vehicle exists from the parking area. On the other hand, a value of the IoU for discriminating the parking of the vehicle in the parking area may be optionally set, but the computing device may determine that the vehicle parks when the IoU is more than 0.7.

[ IOU matching ]

$$IoU = \frac{Area\ of\ Overlap}{Area\ of\ Union}$$

On the other hand, If the camera is blocked or an AI engine has an error that the vehicle is not detected, the computing device may be mistakenly determined that the vehicle has exited. To prevent this phenomenon, the computing device may determine the exit of the vehicle under the condition that the AI engine has continuously tracked the vehicle. In another instance, the computing device does not determine that the vehicle exits for a preset time, e.g. approximate 1 minute even if the parking area and the vehicle area are not overlapped, but it may determine that the vehicle has exited if the parking area and the vehicle area are not overlapped after the preset time has elapsed.

In another embodiment, the computing device may determine that the vehicle parks in the parking area or exits from the parking area, through whether a center of the vehicle area locates in the parking area.

Subsequently, the computing device may delete a tracked result to which the IoU matching is not applied.

Whereas, the computing device may generate new tracked result about the tracked result to which the IoU matching is not applied, estimate the generated new tracked result with a Kalman filter and then perform again the IoU matching about the estimated tracked result.

Moreover, the computing device may refine a tracked result obtained through the IoU matching with the Kalman filter and then perform the IoU matching about the refined tracked result.

In still another embodiment, if a vehicle exiting from a first parking area enters in a second parking area in a preset time, the computing device may determine that the vehicle entered in the second parking area is identical to the vehicle exiting from the first parking area and give the same number or a similar number to the vehicle. In this case, a process of comparing appearance of the vehicles may be not performed.

Briefly, the parking management system of the present disclosure may use the RE-ID technology, the tracking technology, the IoU matching, etc. to identify the vehicle. As a result, the parking management system may charge for the parking fee by identifying accurately the entered vehicle even if the camera does not accurately recognize the vehicle number.

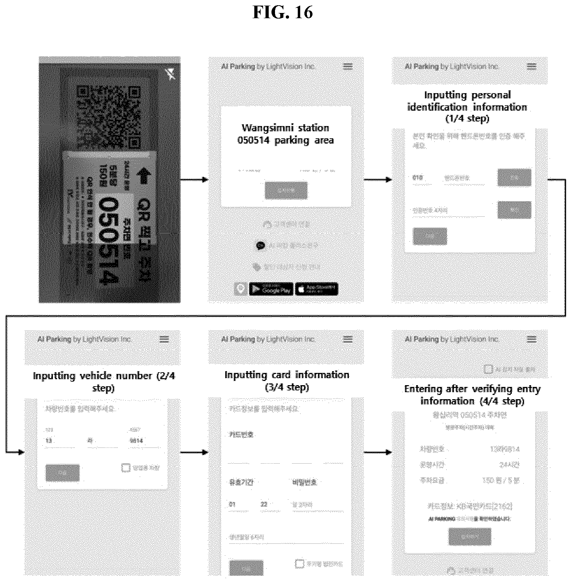

FIG. 15 is a view illustrating schematically a process of recognizing a QR code according to an embodiment of the present disclosure, and FIG. 16 is a view illustrating a process of processing the QR code according to an embodiment of the present disclosure.

In FIG. 15, the parking management system of the present embodiment may further use an identifier, e.g., a QR code shown on a ground or extra device as well as the recognition of the vehicle number through the camera and the RE-ID technology. Hereinafter, it is assumed that the identifier is the QR code for convenience of description.

The use of the identifier is to ensure that payment can be made later when the user who parked does not pay the parking fee through the pay settlement machine and leaves. In this case, there may be no an exit camera or an exit parking barrier. Of course, since payment of the parking fee may be made without paying through the pay settlement machine, there may not be a pay settlement machine.

That is, the parking management system may identify the vehicle by using the camera and the RE-ID technology and charge for the parking fee based on information inputted through the QR code. In this time, parking fee settlement may be made based on the information inputted through the QR code only for vehicles that have not been settled through the pay settlement machine, and the pay settlement machine may be eliminated and the parking fee may be paid based on only the information inputted through the QR code.

Particularly, if the user captures a QR plate installed on a floor of the parking area as shown in FIG. 15, a specific application is accessed as shown in FIG. 16, and the application may display information related to the parking area on which the vehicle parks.

The user may input a phone number, a vehicle number and a card number in the application. As a result, the parking fee for the vehicle of the user may be automatically paid.

Of course, the card number may not be inputted. In this case, the parking fee may be charged through the inputted phone number.

In another embodiment, if the parking fee is not paid through the above process, the computing device of the parking management system may deliver billing information to a server of a manager of the parking lot, allowing the manager to collect the parking fee or prohibit parking during the next visit to the parking lot. In the event that the parking of the vehicle is prohibited, the computing device may store information related to the vehicle of which the parking fee is not paid.

It is necessary to identify the parking, the exit and moving of the vehicle to calculate the parking fee. In this time, the tracking technology described above may be used.

Shortly, the parking management system of the present disclosure may use the RE-ID technology, the tracking technology, the IoU matching, the inputting of information through the QR code, etc. to identify the vehicle. As a result, the parking management system may charge for the parking fee by identifying accurately the entered vehicle even if the camera does not recognize accurately the vehicle number. Especially, the parking management system may collect automatically the parking fee at a later time even if the vehicle exits the parking lot without paying the parking fee.

Hereinafter, the RE-ID technology that may robustly operate under various external environmental conditions (illumination, weather, etc.) will be described.

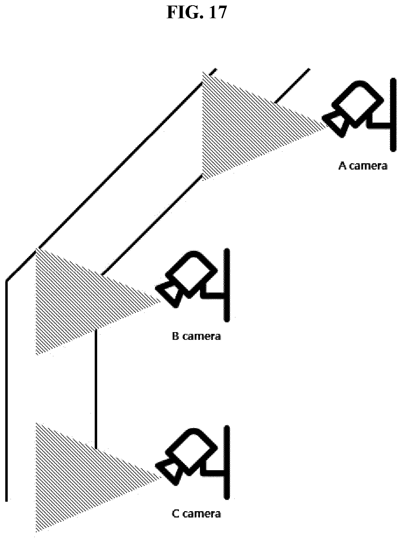

FIG. 17 to FIG. 24 are views illustrating a RE-ID technology according to another embodiment of the present disclosure.

The parking management system may identify a vehicle considering physical location of a camera or geographical features of a capturing location to operate robustly the RE-ID technology under various external environmental conditions.

The RE-ID technology identifies whether the vehicles are the same by using appearance similarity of the vehicles. However, it may be difficult to identify accurately the vehicle only by comparing appearance information of vehicles due to various external environments. Accordingly, the parking management system of the present disclosure may identify the vehicle considering the physical location of the camera or the geographical features of the capturing location.

In an embodiment, the vehicle in motion may appear differently from camera to camera when multiple cameras are installed as shown in FIG. 17. Accordingly, the computing device may calculate an adjacency matrix depending on physical locations of the cameras belonged to a network and adjust a weight of a matching function used in a re-identification process by using the calculated adjacency matrix.

In the event that the cameras are installed as shown in FIG. 15, the adjacency matrix of the cameras is follows. Referring to the adjacency matrix, an A camera is adjacent to a B camera but is not adjacent to a C camera, the B camera is adjacent to the A camera and the C camera, and the C camera is adjacent to the B camera but is not adjacent to the A camera. A value may be 1 when the cameras are adjacent and it may be 0 when the cameras are not adjacent. However, the setting of the value may be variously modified.

[ adjacency matrix ]

|   | A | B | C |
|---|---|---|---|
| A | 1 | 1 | 0 |
| B | 1 | 1 | 1 |
| C | 0 | 1 | 1 |

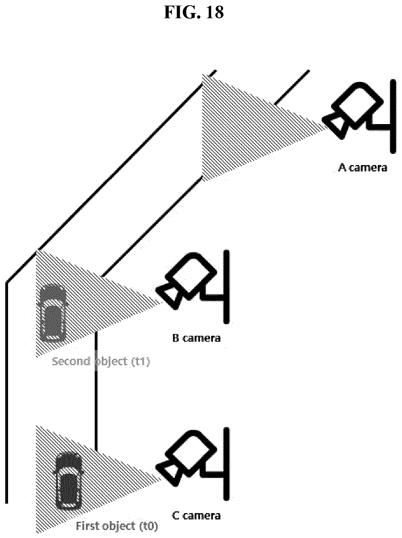

In the installing of the cameras, a first vehicle is detected by the C camera at a t0 time point and a second vehicle is detected by the B camera at a t1 time point as shown in FIG. 18. Here, t0 < t1. Since the B camera and the C camera are physically adjacent, a value corresponding to the B camera and the C camera will be 1 in the adjacency matrix. A distance function or the matching function may be configured as shown in following equation 1 to avoid any penalty when a re-identification model calculates a distance between a feature vector f1 extracted from the first vehicle and a feature vector f2 extracted from the second vehicle.

【 Equation 1 】

$$D(f_1, f_2) = e^{\lambda(1 - V_{BC})} \sqrt{\sum_{x=1}^{N} (f_1(x) - f_2(x))^2}$$

Here, N means a dimension of the extracted feature vector, and V indicates a similarity matrix. $V_{BC}$ may have a value "1" when the B camera and the C camera are physically adjacent, and it may have a value "0" when the B camera and the C camera are not physically adjacent. $\lambda$ means a parameter indicating a penalty degree and may have a value higher than 1.

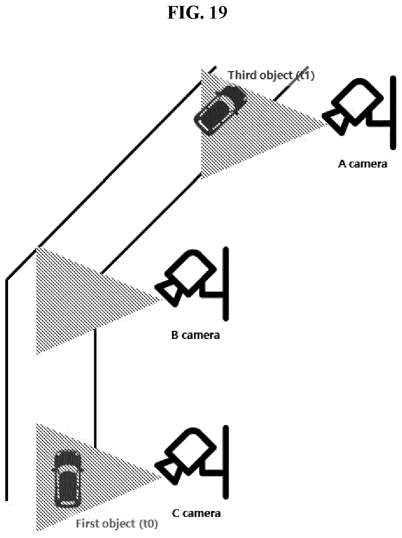

In another example, if the first vehicle is detected by the C camera at t0 time point and a third vehicle is detected by the A camera at a t1 time point as shown in FIG. 19 and t0 < 11, a value corresponding to the A camera and the C camera will be 0 in the adjacency matrix because the A camera and the C camera are not adjacent. As a result, a weight is applied by $e^{\lambda}$ when a distance between feature vectors of two vehicles is calculated. That is, penalty is applied.

Briefly, the computing device may set differently the weight according to adjacency degree between the cameras when it calculates the distance between the feature vectors of the vehicles. Particularly, the computing device may enhance the accuracy of the re-identification by increasing the probability that a vehicle detected by one camera is matched with a vehicle detected by an adjacent camera. That is, the computing device may improve the accuracy by imposing spatial constraint on a re-identification algorithm.

In another embodiment, the computing device may increase the accuracy of the re-identification by comparing distances between the vehicles based on a modeling result including geographical information of a space captured by the camera. This is to solve the case where it is difficult to perform accurate re-identification only by using the appearance information of the vehicle when performing re-identification in one camera.

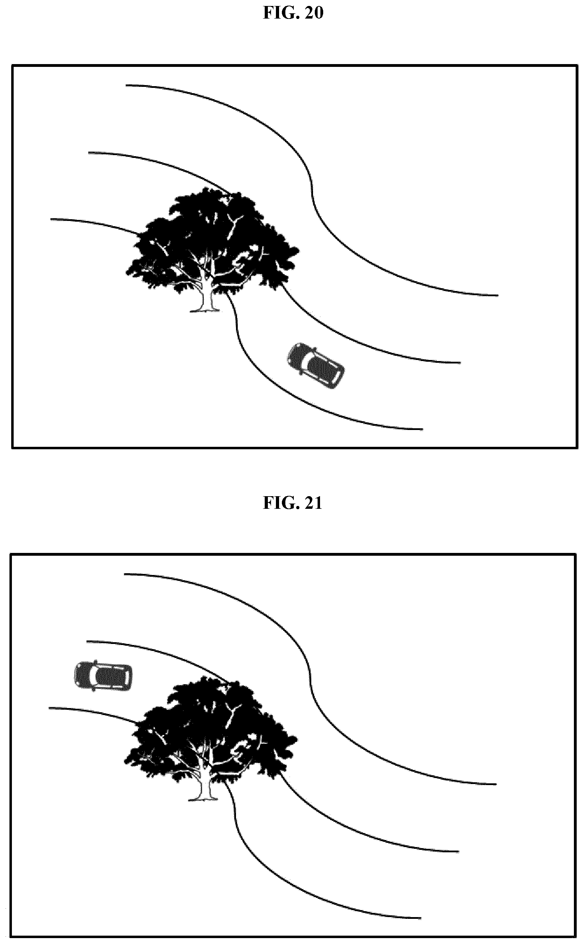

For example, it is assumed that when capturing a two-lane road as shown in FIGS. 20 and 21 with one camera, one lane is obscured by a tree (obstacle), and so an object traveling on the lane disappears from the camera and then reappears.

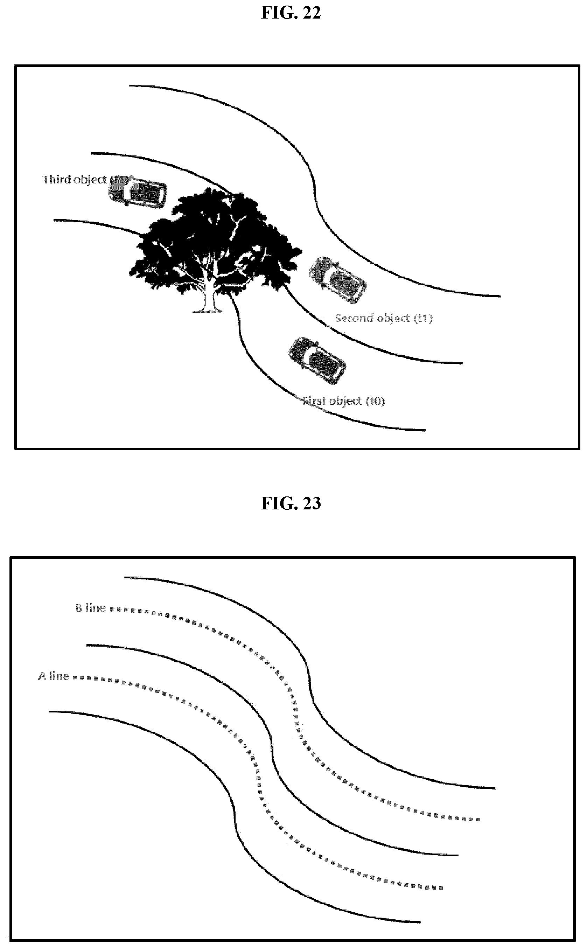

It is difficult to obtain accurate re-identification result only by comparing the appearance of the vehicles if the appearance of the second vehicle is similar to the appearance of the third vehicle while the first vehicle detected at the t0 time point before the tree is obscured and the second vehicle and the third vehicle detected at the t1 time point exist after a constant time is elapsed as shown in FIG. 22.

It is necessary to utilize additional spatial constraint to solve the above problem. It may produce an incorrect result that the second vehicle is more similar to the first vehicle if utilizing a straight distance (Euclidean distance) used generally for the spatial constraint.

To prevent the error, the computing device may set an A lane and a B lane for modeling a road of two lanes as shown in FIG. 23 and calculate a distance between the vehicles by using the synthetic A lane and the synthetic B lane instead of calculating the Euclidean distance between the vehicles.

For example, it is assumed that a distance between the first vehicle or the third vehicle and the A lane is 0 because that first vehicle and the third vehicle locate on the A lane and a distance between the second vehicle and the B lane is 0 because the second vehicle locates on the Blane.

If comparing the first vehicle with the third vehicle using the A lane and the B lane, a distance between the first vehicle and the A lane is 0 and is identical to a distance between the third vehicle and the A lane and there is not much of a distance difference from the B lane because the first vehicle and the third vehicle locate on the A lane. Whereas, if comparing the first vehicle with the second vehicle, a distance between the first vehicle and the A lane is 0 but a distance between the second vehicle and the A lane is greater than 0, and a distance between the first vehicle and the B lane is greater than 0 but a distance between the second vehicle and the B lane is 0. As a result, the computing device may determine that the first vehicle is more similar to the third vehicle.

Shortly, the computing device may obtain more accurate re-identification result by comparing the distance between the vehicles based on the modeling result including the geographical information of the space captured by the camera.

Of course, the re-identification process is performed by using the lane in the above description, but it is not limited as the lane. The re-identification process may be performed by considering different geographical environments. For example, two paths on which the vehicle drives may be used without using the lane.

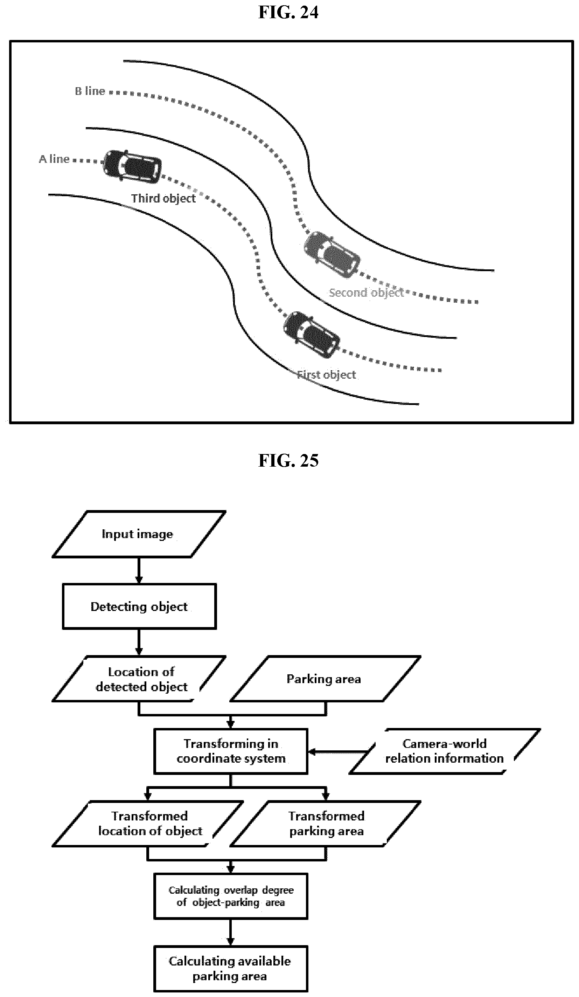

FIG. 25 is a flowchart illustrating a process of guiding available parking space according to an embodiment of the present disclosure.

In FIG. 25, a computing device detects the location of a vehicle by applying an object detection algorithm to an image obtained by a camera.

Subsequently, the computing device may transform a preset parking area and the detected location of the vehicle into a coordinate system based on camera-world relation information. In the transformed coordinate system, a distance between two points on the same plane and the actual measured distance in the real world may be the same within an error range.

Next, the computing device may calculate an overlap degree of the detected vehicle and the parking area and detect available parking space through the calculated overlap degree. Particularly, the computing device may determine that the vehicle parks in the parking area when the overlap degree of the detected vehicle the parking area is high and determine that the vehicle is not parked in the parking area when the overlap degree of the detected vehicle and the parking area is 0 or small.

Subsequently, the computing device may provide a function that displays how many vehicles of each type can be parked in the currently available parking space based on the average/standard deviation of the width/length of vehicles (such as small SUVs, mid-size sedans, etc.) when calculating the available parking space.

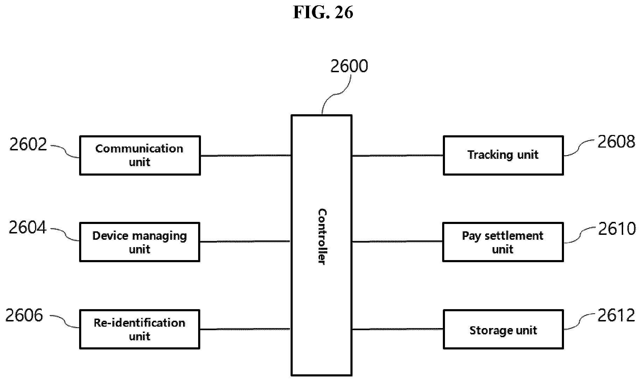

FIG. 26 is a block diagram illustrating a computing device according to an embodiment of the present disclosure.

In FIG. 26, the computing device of the present embodiment may include a controller 2600, a communication unit 2602, a device managing unit 2604, a re-identification unit 2606, a tracking unit 2608, a pay settlement unit 2610 and a storage unit 2612. Additionally, the computing device may further include an identifier unit.

The communication unit 2602 is a communication path with cameras, a parking barrier or a pay settlement machine.

The device managing unit 2604 may manage an operation of the cameras, the parking barrier or the fee settlement machine.

The re-identification unit 2606 may re-identify the vehicle through the RE-ID technology and identify the vehicle by combining information of an image obtained by the camera and information detected through the re-identification.

The tracking unit 2608 may track the vehicle using internal cameras in the parking lot and detect the vehicle number in the tracking process. Especially, the tracking unit 2608 may use the IoU technology to track the vehicle.

The identifier unit receives user's information through recognition of an identifier.

The pay settlement unit 2610 may perform pay settlement by a parking time about the identified vehicle. Especially, the pay settlement unit 2610 may collect automatically parking fee based on the user's information inputted through the recognition of the identifier, without using the pay settlement machine.

The storage unit 2612 may store various information such as the image obtained by the camera, the re-identified information, the tracking result, etc.

The controller 2600 may control an operation of elements in the computing device.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present disclosure or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the disclosure, and vice versa.

The embodiments of the disclosure described above are disclosed only for illustrative purposes. A person having ordinary skill in the art would be able to make various modifications, alterations, and additions without departing from the spirit and scope of the disclosure, but it is to be appreciated that such modifications, alterations, and additions are encompassed by the scope of claims set forth below.

**Claims**

1. A parking management system comprising:

    a first image obtaining device configured to recognize a vehicle number at an entry of a parking lot or in the parking lot;
    a second image obtaining device installed in the parking lot; and
    a computing device configured to communicate with the first image obtaining device or the second image obtaining device,
    wherein the computing device identifies the vehicle considering vehicle information detected by using a re-identification (RE-ID) technology and vehicle information obtained by analyzing an image obtained from at least one of the image obtaining devices, and
    the RE-ID technology determines whether vehicles are the same by using appearance information of a vehicle included in an image obtained by the first image obtaining device and appearance information of a vehicle included in an image obtained by the second image obtaining device.

2. The parking management system of claim 1, wherein the first image obtaining device is an entry camera,

    and wherein the RE-ID technology detects a type of the vehicle by comparing a vehicle image included in the image obtained by the first image obtaining device with a vehicle image stored in a database, and determines whether the vehicles are the same by comparing a vehicle image included in the image obtained by the second image obtaining device with the vehicle image included in the image obtained by the first image obtaining device based on the detected type of the vehicle, and
    the computing device links numbers of the vehicles when it is determined that the vehicles are the same through the RE-ID technology.

3. The parking management system of claim 1, wherein the RE-ID technology is trained through a deep learning model using a triplet loss which is a loss function,
    and wherein the RE-ID technology locates close to each other images of the same vehicles in an N (an integer more than 2)-dimensional feature space and locates far apart images of different vehicles in the N-dimensional feature space through the triplet loss when the images including the vehicle are inputted.

4. The parking management system of claim 1, wherein the computing device tracks a vehicle through a tracking function,
    and wherein the tracking function determines whether a vehicle parks in a parking area or exits from the parking area by comparing location information of the vehicle in previous frame obtained from the second image obtaining device with location information of the vehicle in current frame.

5. The parking management system of claim 4, wherein the tracking function determines whether the vehicle parks in the parking area or exits from the parking area through an intersection over union (IoU) matching,

and wherein the IoU matching detects a proportion of a vehicle area detected by an AI model in the sum of the parking area and the vehicle area, and
the tracking function determines that the vehicle parks in the parking area when a result of the IoU matching is more than a predefined value and determines that the vehicle exits from the parking area when the result is smaller than the predefined value.

[ IoU matching ]

$$IoU = \frac{\text{Area of Overlap}}{\text{Area of Union}}$$

6. The parking management system of claim 4, wherein the tracking function determines that the vehicle parks in the parking area or exits from the parking area through whether a center of the vehicle area detected by an AI model locates in the parking area.

7. The parking management system of claim 1, wherein the computing device configures an adjacency matrix based on physical locations of image obtaining devices belonged to one network and adjusts a weight of an equation used in a re-identification process by using the configured adjacency matrix,

and wherein the weight is given by applying a value included in the adjacency matrix to the equation when the computing device calculates a distance between feature vectors of the vehicles obtained by the image obtaining devices.

[ Equation ]

$$D(f_1, f_2) = e^{\lambda(1 - V_{bc})} \sqrt{\sum_{x=1}^{N} (f_1(x) - f_2(x))^2}$$

where, N means a dimension of the feature vector, V indicates a similarity matrix, and $V_{BC}$ has a value "1" when the image obtaining devices are physically adjacent and has a value "0" when the image obtaining devices are not physically adjacent.

8. The parking management system of claim 1, wherein the computing device identifies the vehicle by comparing a distance between the vehicles based on a modeling result including geographical information of a space monitored by at least one of the image obtaining devices.

9. The parking management system of claim 8, wherein the computing device sets a synthetic A line and a synthetic B line to a first lane and a second lane when the first lane and the second lane exist, and calculates the distance between the vehicles by using the A line and the B line when calculating a spatial distance of two vehicles,

and wherein a distance between a vehicle located on the first lane and the A line is set to 0, a distance between a vehicle located on the second lane the A line is set to have a value higher than 0,
a distance between the vehicle located on the second lane and the B line is set to 0, and a distance between the vehicle located on the first lane and the B line is set to have a value higher than 0.

10. The parking management system of claim 1, wherein the computing device detects a location of the vehicle by applying an object detection algorithm to the image obtained by the second image obtaining device, transforms a predefined parking area and the detected location of the vehicle into a coordinate system based on camera-world relation information, and detects available parking area by calculating an overlap degree of the detected vehicle and the parking area based on the transforming.

11. A parking management system comprising:

    a first image obtaining device configured to recognize a vehicle number;
    a second image obtaining device;
    an identifier; and
    a computing device configured to communicate with the first image obtaining device or the second image obtaining device,
    wherein the computing device identifies the vehicle by using one or more of vehicle information obtained by analyzing an image obtained by at least one of the image obtaining devices and vehicle information detected by using a re-identification (RE-ID) technology,
    the computing device charges for or collects automatically parking fee based on an inputted user's information when a user of the vehicle inputs the user's information through the recognition of the identifier, and
    the RE-ID technology determines whether vehicles are the same by using appearance information of a vehicle included in an image obtained by the first image obtaining device and appearance information of a vehicle included in an image obtained by the second image obtaining device.

12. The parking management system of claim 11, wherein the image obtaining devices are cameras and the identifier is a QR code,

    and wherein the QR code is shown on a floor of a parking area or on a device, the user's information includes one or more of a vehicle number, a phone number and account information, and
    the RE-ID technology detects a type of the vehicle by comparing a vehicle image included in the image obtained by the first image obtaining device with a vehicle image stored in a database, and determines whether the vehicles are the same by comparing a vehicle image included in the image obtained by the second image obtaining device with the vehicle image included in the image obtained by the first image obtaining device based on the detected type of the vehicle.

13. The parking management system of claim 11, wherein the parking fee is automatically paid based on the user's information through the identifier,
    and wherein the computing device transmits information related to the parking fee to a server of a manager or stores information related to the vehicle to prohibit parking of the vehicle during the next visit to the parking lot when the parking fee is not paid.

14. The parking management system of claim 11, wherein the RE-ID technology is trained through a deep learning model using a triplet loss which is a loss function,
    and wherein the RE-ID technology locates close to each other images of the same vehicles in an N (an integer more than 2)-dimensional feature space and locates far apart images of different vehicles in the N-dimensional feature space through the triplet loss when the images including the vehicle are inputted.

15. The parking management system of claim 11, wherein the computing device configures an adjacency matrix based on physical locations of image obtaining devices belonged to one network and adjusts a weight of an equation used in a re-identification process by using the configured adjacency matrix,

    and wherein the weight is given by applying a value included in the adjacency matrix to the equation when the computing device calculates a distance between feature vectors of the vehicles obtained by the image obtaining devices.

[ Equation ]

$$D(f_1, f_2) = e^{\lambda(1 - V_{BC})} \sqrt{\sum_{x=1}^{N} (f_1(x) - f_2(x))^2}$$

where, N means a dimension of the feature vector, V indicates a similarity matrix, and $V_{BC}$ has a value "1" when the image obtaining devices are physically adjacent and has a value "0" when the image obtaining devices are not physically adjacent.

16. The parking management system of claim 11, wherein the computing device sets a synthetic A line and a synthetic B line to a first lane and a second lane when the first lane and the second lane exist, and calculates the distance between the vehicles by using the A line and the B line when calculating a spatial distance of two vehicles,

and wherein a distance between a vehicle located on the first lane and the A line is set to 0, a distance between a vehicle located on the second lane the A line is set to have a value higher than 0,
a distance between the vehicle located on the second lane and the B line is set to 0, and a distance between the vehicle located on the first lane and the B line is set to have a value higher than 0.

17. A computing device used in a parking management system, the computing device comprising:

a communication unit which is a communication path with a first image obtaining device or a second image obtaining device; and
a re-identification unit configured to identify a vehicle entered in a parking lot considering both of vehicle information detected by using a re-identification RE-ID technology and vehicle information obtained by analyzing an image obtained by at least one of the image obtaining devices,
wherein the RE-ID technology determines whether vehicles are the same by using appearance information of a vehicle included in an image obtained by the first image obtaining device and appearance information of a vehicle included in an image obtained by the second image obtaining device.

18. The computing device of claim 17, wherein the RE-ID technology is trained through a deep learning model using a triplet loss which is a loss function,
and wherein the RE-ID technology locates close to each other images of the same vehicles in an N (an integer more than 2)-dimensional feature space and locates far apart images of different vehicles in the N-dimensional feature space through the triplet loss when the images including the vehicle are inputted.

19. The computing device of claim 17, wherein the re-identification unit configures an adjacency matrix based on physical locations of image obtaining devices belonged to one network and adjusts a weight of an equation used in a re-identification process by using the configured adjacency matrix,

and wherein the weight is given by applying a value included in the adjacency matrix to the equation when the computing device calculates a distance between feature vectors of the vehicles obtained by the image obtaining devices.

[ Equation ]

$$D(f_1, f_2) = e^{\lambda(1 - V_{BC})} \sqrt{\sum_{x=1}^{N} (f_1(x) - f_2(x))^2}$$

where, N means a dimension of the feature vector, V indicates a similarity matrix, and $V_{BC}$ has a value "1" when the image obtaining devices are physically adjacent and has a value "0" when the image obtaining devices are not physically adjacent.

20. The computing device of claim 17, wherein the computing device identifies the vehicle by comparing a distance between the vehicles based on a modeling result including geographical information of a space monitored by at least one of the image obtaining devices.

# EP 4 481 622 A1

21. A computing device used in a parking management system, the computing device comprising:

a communication unit which is a communication path with a first image obtaining device or a second image obtaining device;

an identifier unit configured to receive user's information through recognition of an identifier;

a pay settlement unit; and

a re-identification unit configured to identify a vehicle entered in a parking lot considering at least one of vehicle information detected by using a re-identification RE-ID technology and vehicle information obtained by analyzing an image obtained by at least one of the image obtaining devices,

wherein the pay settlement unit charges for or collects automatically parking fee based on an inputted user's information when a user of the vehicle inputs the user's information through the recognition of the identifier, and the RE-ID technology determines whether vehicles are the same by using appearance information of a vehicle included in an image obtained by the first image obtaining device and appearance information of a vehicle included in an image obtained by the second image obtaining device.

22. The computing device of claim 21, wherein the computing device transmits information related to the parking fee to a server of a public organization or stores information related to the vehicle to prohibit parking of the vehicle during the next visit to the parking lot when the parking fee is not paid.

**FIG. 1**

Determining parking of a vehicle based on IoT sensor (1:1 matching)

Determining parking of a vehicle based on a GPS receiving signal of a mobile phone

Parking area1  Parking area2  Parking area3  Parking area4

Determining parking of a vehicle based on a CCTV (1:N matching)

**FIG. 2**

**FIG. 3**

**FIG. 4**

• An example of a vehicle license plate attached to the side of a vehicle

• Vehicle license plate seen from the side

• Vehicle license plate seen from above

• An example of recognizing a vehicle license plate seen from the side

06노 0655

155루 8494

• An example of recognizing a vehicle license plate seen from above

06노 0655 ⇨ 06노 0655

**FIG. 5**

| Entrance camera | Parking barrier | RE-ID technology |

[ entry ]

| Exit camera | Parking barrier | Pay settlement machine |

[ exit ]

## FIG. 6

Inputted vehicle image

Matching with internal vehicle DB

## FIG. 7

**FIG. 8**

Applying a deep learning model to a vehicle image
→ mapping to feature space of N dimension

Training a model so that the same vehicle is located close to each other

Training a model so that different vehicles is located far apart to distinguish easily

**FIG. 9**

Internal camera     Parking barrier     RE-ID technology

[ entry ]

Exit camera     Parking barrier     Pay settlement machine

[ exit ]

## FIG. 10

Internal camera     Parking barrier     RE-ID technology

[ entry ]

Tracking technology     Parking barrier     Pay settlement machine

[ exit ]

**FIG. 11**

**FIG. 12**

**FIG. 13**

**FIG. 14**

**FIG. 15**

## FIG. 16

**FIG. 17**

A camera

B camera

C camera

**FIG. 18**

A camera

B camera

Second object (t1)

C camera

First object (t0)

**FIG. 19**

Third object (t1)

A camera

B camera

C camera

First object (t0)

**FIG. 20**

**FIG. 21**

**FIG. 22**

**FIG. 23**

FIG. 24

FIG. 25

EP 4 481 622 A1

**FIG. 26**

2600

2602 — Communication unit

2604 — Device managing unit

2606 — Re-identification unit

Controller

2608 — Tracking unit

2610 — Pay settlement unit

2612 — Storage unit

33

## INTERNATIONAL SEARCH REPORT

| International application No. |
|---|
| **PCT/KR2023/004267** |

| | |
|---|---|
| **A.** | **CLASSIFICATION OF SUBJECT MATTER** |

**G06K 7/14**(2006.01)i; **G06K 19/06**(2006.01)i; **G06Q 50/30**(2012.01)i; **G06V 20/62**(2022.01)i; **G06V 10/74**(2022.01)i; **G06V 10/80**(2022.01)i; **H04N 7/18**(2006.01)i; **G06N 3/08**(2006.01)i; **G06T 7/70**(2017.01)i

According to International Patent Classification (IPC) or to both national classification and IPC

| | |
|---|---|
| **B.** | **FIELDS SEARCHED** |

Minimum documentation searched (classification system followed by classification symbols)

G06K 7/14(2006.01); G06K 9/32(2006.01); G06N 3/08(2006.01); G06Q 50/10(2012.01); G06Q 50/30(2012.01); G08G 1/017(2006.01); G08G 1/04(2006.01); G08G 1/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 주차(parking), 영상(video), 재식별화(RE-ID), 딥러닝(deep learning), QR 코드(QR code)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2018-0124477 A (DAEYOUNG IOT INC.) 21 November 2018 (2018-11-21) See paragraphs [0040]-[0041], claims 1-2 and 6-7 and figures 3-4. | 1-2,17 |
| Y | | 3-6,10-14,18,21-22 |
| A | | 7-9,15-16,19-20 |
| Y | KR 10-2018-0133657 A (HANWHA AEROSPACE CO., LTD. et al.) 17 December 2018 (2018-12-17) See paragraphs [0072] and [0088], claim 1 and figures 1-6. | 3,14,18 |
| Y | KR 10-2278030 B1 (DHD CO., LTD.) 15 July 2021 (2021-07-15) See paragraph [0049], claim 1 and figure 6. | 4-6,10 |
| Y | KR 10-2018-0014455 A (BLAKSTONE) 09 February 2018 (2018-02-09) See paragraphs [0031] and [0068], claim 7 and figures 1-2. | 11-14,21-22 |

☑ Further documents are listed in the continuation of Box C.  ☑ See patent family annex.

| | |
|---|---|
| \* | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 July 2023** | **10 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004267**

### C.  DOCUMENTS CONSIDERED TO BE RELEVANT

| Category* | Citation of document, with indication, where appropriate, of the relevant passages | Relevant to claim No. |
|---|---|---|
| A | KR 10-2021-0098894 A (SK TELECOM CO., LTD.) 11 August 2021 (2021-08-11)<br>See claim 1 and figures 1-3. | 1-22 |

| Patent document cited in search report | | | Publication date (day/month/year) | Patent family member(s) | | | Publication date (day/month/year) |
|---|---|---|---|---|---|---|---|
| KR | 10-2018-0124477 | A | 21 November 2018 | KR | 10-1988540 | B1 | 12 June 2019 |
| KR | 10-2018-0133657 | A | 17 December 2018 | | None | | |
| KR | 10-2278030 | B1 | 15 July 2021 | | None | | |
| KR | 10-2018-0014455 | A | 09 February 2018 | | None | | |
| KR | 10-2021-0098894 | A | 11 August 2021 | KR | 10-2020-0126764 | A | 09 November 2020 |
| | | | | KR | 10-2298725 | B1 | 06 September 2021 |
| | | | | KR | 10-2477061 | B1 | 13 December 2022 |

Form PCT/ISA/210 (patent family annex) (July 2022)